(19)

Europäisches Patentamt

European Patent Office

Office européen des brevets

(11) **EP 3 388 862 A1**

(12) **EUROPÄISCHE PATENTANMELDUNG**

(43) Veröffentlichungstag:
**17.10.2018 Patentblatt 2018/42**

(51) Int Cl.:
**G01S 17/32** *(2006.01)* **G01S 17/36** *(2006.01)*
**G01S 7/491** *(2006.01)*

(21) Anmeldenummer: **17166662.1**

(22) Anmeldetag: **13.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Leica Geosystems AG**
**9435 Heerbrugg (CH)**

(72) Erfinder: **WILDI, Konrad**
**CH-5035 Unterentfelden (CH)**

(74) Vertreter: **Kaminski Harmann**
**Patentanwälte AG**
**Landstrasse 124**
**9490 Vaduz (LI)**

(54) **HOCHAUFGELÖSTE ENTFERNUNGSMESSUNG MITTELS INTERFEROMETRIE**

(57) Die vorliegende Erfindung betrifft ein Verfahren und ein Messgerät zur Entfernungsmessung mittels Interferometrie, mit einer Messstrahlung und einer relativ dazu frequenzverschobenen Referenzstrahlung, erzeugt durch einen mit einem Trägersignal angesteuerten Frequenzschieber, wobei im Rahmen einer Ableitung der Entfernungsmessung ein System-Clock von einem Referenz-Zähler zur Erfassung einer Trägerfrequenz des Trägersignals entkoppelt und dafür gesorgt wird, dass der System-Clock und der Referenz-Clock möglichst verschieden sind, um eine Phaseninformation zu erhalten und dadurch eine Auflösungsverbesserung zu erzielen.

Fig.3

EP 3 388 862 A1

**Beschreibung**

Die Erfindung betrifft ein Verfahren für ein Bestimmen einer Entfernung zu einem retro-reflektierenden Ziel nach dem Oberbegriff des Anspruchs 1 und ein Messgerät zur Ausführung des erfindungsgemässen Verfahrens nach Anspruch 8.

Distanzmesser, wie sie beispielsweise in Lasertrackern für die industrielle Vermessung oder in geodätischen Messgeräten - z.B. Theodoliten oder Totalstationen - eingesetzt werden, sind oft als Interferometer ausgebildet oder weisen eine Kombination mit einer interferometrischen Einheit auf, beispielsweise eine Kombination einer Distanzmessung nach dem Pulslaufzeitprinzip mit einer interferometrischen Messung.

Durch die Verwendung eines interferometrischen Messverfahrens kann eine sehr hohe Genauigkeit erreicht werden. Die erreichbare Auflösung für die Distanzmessung mit dem Interferometer (z.B. die anhand einer Zählung von Übergängen von konstruktiver zu destruktiver Interferenz erreichbare Distanzmessgenauigkeit) wird dabei durch die Wellenlänge des emittierten Laserlichts definiert. Typischerweise ist die erreichbare Auflösung demnach im Wesentlichen als ein ganzzahliges Vielfaches der halben Wellenlänge der Messstrahlung gegeben, da das Laserlicht zum Ziel und zurück zweimal denselben Weg zurücklegen muss.

Ein Zielpunkt für ein interferometrisches Messgerät, beispielsweise ein Lasertracker für eine fortlaufende Verfolgung eines Zielpunkts und eine koordinative Positionsbestimmung dieses Punkts, kann durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zum Messgerät reflektiert, wobei der reflektierte Strahl mit einer Erfassungseinheit der Vorrichtung erfasst wird. Im Beispiel des Lasertrackers wird hierbei eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung ermittelt.

Aufgrund der grossen Kohärenzlänge und der damit ermöglichten Messreichweite werden als Lichtquelle für das Interferometer oft Gaslaser eingesetzt, z.B. HeNe-Laser. Alternativ werden heutzutage zunehmend auch Diodenlaser eingesetzt, welche an sich kompakt und kostengünstig sind und gegenüber den Gaslasern einen geringeren Leistungsverbrauch aufweisen.

Insbesondere für die Verwendung von Laserdioden als Interferometerlichtquelle oder als Wellenlängennormal ist oft zusätzlich eine Stabilisierung auf eine bekannte Wellenlänge erforderlich. Diese kann z.B. spektroskopisch auf eine Absorptionslinie eines Absorptionsmediums erfolgen (z.B. unter Verwendung einer Gaszelle).

Im Stand der Technik sind unterschiedliche interferometrische Messmethoden bekannt, zum Beispiel verschiedene eher einfache Messanordnungen für die Messung von relativen Distanzänderungen sowie komplexe Anordnungen für die Messung von absoluten Distanzen mittels interferometrischen Messungen oder eine Kombination von relativen interferometrischen Distanzmessungen mit einem so genannten Absolutdistanzmesser.

Beispielsweise ist eine Kombination von Messmitteln zur Entfernungsbestimmung durch das Produkt AT901 der Leica Geosystems AG bekannt. Eine Kombination eines Absolutdistanzmessers und eines Interferometers zur Entfernungsbestimmung mit einem HeNe-Laser ist beispielsweise aus der WO 2007/079600 A1 bekannt.

Gemäss dem prinzipiellen interferometrischen Messprinzip - Zählung von Wellenlängeninkrementen, z.B. mittels Übergängen von konstruktiver zu destruktiver Interferenz - messen Interferometer relative Distanzänderungen, wobei sich oft nicht unterscheiden lässt, ob sich ein Zielobjekt vom Messinstrument wegbewegt oder ob sich das Zielobjekt auf das Messinstrument zubewegt.

Eine Möglichkeit zur Ableitung einer Richtungsinformation (Information ob sich die Entfernung zum Ziel vergrössert oder verkleinert) besteht beispielsweise darin, die ausgesendete und am Ziel reflektierte Messstrahlung für die Ermittlung eines interferometrischen Ausgangssignals mit einer frequenzverschobenen Referenzstrahlung zu überlagern, wobei daraus die Richtungsinformation beispielsweise unter Zuhilfenahme des Doppler-Effekts ermittelt werden kann.

Zur Ausführung einer korrekten Messung der Distanzänderung, insbesondere einer fortlaufend korrekten Messung bei einer Verfolgung eines Ziels, mittels des Interferometers muss ein während der Messung dauerhaftes Erfassen und korrektes Auslesen der durch Interferenzeffekte (z.B. Intensitätsmaxima und -minima) erzeugten Interferometersignale gewährleistet sein. Die Bestimmung der Distanzänderung hängt dabei ab von der Anzahl der detektierten Interferometersignale (Wellenlängeninkremente).

Insbesondere weisen herkömmliche Interferometer nach dem Stand der Technik grundsätzlich die Limitierung auf, dass die Auflösung für die Distanzmessung auf ein Wellenlängeninkrement im Wesentlichen gegeben durch die halbe Wellenlänge der Messstrahlung beschränkt ist, da der Zähler des Wellenlängeninkrements aus einem Interferometerausgangssignal nur ganze 360-Grad-Phasenverschiebungen ableiten kann, und dass bei ruhendem Ziel keine Information der Phase abgeleitet werden kann.

Es ist deshalb eine Aufgabe der Erfindung, ein Verfahren für ein Distanzmessgerät bereitzustellen, in dessen Rahmen die Distanzauflösung einer interferometrischen Messung erhöht wird, insbesondere wobei Distanzmessungen genauer als die halbe Wellenlänge der emittierten Strahlung durchgeführt werden können.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zum Bestimmen einer Entfernungsänderung zu einem retro-reflektierenden Ziel mittels Interferometrie, mit einem Erzeugen einer Strahlung mit einer definierten Frequenz, wobei zumindest ein Teil der Strahlung als Referenzstrahlung verwendet wird und zumindest ein Teil der Strahlung als Messstrahlung zum Ziel ausgesendet wird, und einer Frequenzverschiebung eines Teils von mindestens einem der Messstrahlung, der Referenzstrahlung, und einer Empfangsstrahlung, welche zumindest auf einem Teil der vom Ziel zurückkommmenden Messstrahlung basiert. Die Frequenzverschiebung wird erzeugt mittels eines mit einem Trägersignal angesteuerten Frequenzschiebers, beispielsweise eines akusto-optischen Modulators, wobei das Trägersignal eine Trägerfrequenz aufweist. Das Verfahren umfasst ferner ein Erfassen eines Überlagerungssignals basierend auf zumindest einem Teil der Empfangsstrahlung und der Referenzstrahlung, beispielsweise durch ein Detektieren und gegebenenfalls eine elektronische Weiterverarbeitung einer optischen Überlagerung der Empfangsstrahlung mit der Referenzstrahlung durch einen lichtempfindlichen Detektor, z.B. basierend auf einer Photodiode. Basierend auf dem Überlagerungssignal wird ein Interferometerausgangssignal mit einer Interferometerausgangsfrequenz erzeugt, nachfolgend IFM-Frequenz genannt, wobei die Entfernungsänderung basierend auf der IFM-Frequenz und der Trägerfrequenz, insbesondere basierend auf dem Doppler-Effekt abgeleitet wird, nämlich basierend auf diskreten positiven und negativen Werten eines Wellenlängeninkrements, welches im Wesentlichen als ein ganzzahliges Vielfaches der halben Wellenlänge der Messstrahlung gegeben ist. Dabei wird die IFM-Frequenz durch Empfangs-Zählstände eines Empfangs-Zählers erfasst, die Trägerfrequenz durch Referenz-Zählstände eines Referenz-Zählers erfasst, und die Empfangs-Zählstände und die Referenz-Zählstände werden mittels eines Synchronisationsglieds basierend auf einem System-Clock mit einer Systemfrequenz in ein gemeinsames System-Zählsystem überführt, so dass basierend auf System-Zählständen des System-Zählsystems eine aktuelle Entfernungsänderung zum Ziel abgeleitet werden kann.

Gemäss der vorliegenden Erfindung unterscheidet sich die Systemfrequenz von der Trägerfrequenz durch eine definierte Differenzfrequenz und die Ableitung der Entfernungsänderung erfolgt unter Berücksichtigung eines Zählerverlaufs des System-Zählsystems über einen durch mehrere Takte des System-Zählsystems definierten Zählbereich, beispielsweise mittels einer Integration des Zählerverlaufs über den definierten Zählbereich.

In einer Ausführungsform ist die Systemfrequenz zum Beispiel grösser als 50 MHz, insbesondere grösser als 100 MHz, im Speziellen grösser als 200 MHz. Die Systemfrequenz kann dabei grösser oder kleiner sein als die Trägerfrequenz sein.

Als Empfangs-Zähler und/oder Referenz-Zähler können beispielsweise Zähler basierend auf einem Grey-Code-Zähler, insbesondere einem Johnson-Zähler, verwendet werden.

Beispielsweise - da die beiden Eingangssignale (Trägersignal und Überlagerungssignal) typischerweise asynchron sind und eine ähnliche Frequenz wie die Systemfrequenz haben - werden die Eingangssignale auf zwei Johnson-Zähler geführt und nicht direkt abgetastet. Johnson-Zähler haben ähnliche Eigenschaften wie Gray Code Zähler, allerdings mit dem Vorteil, dass die einzelnen Bitfrequenzen tiefer sind, wodurch auch lange metastabile Zustände aufgefangen werden und in der späteren Signalkette nicht zu dauerhaften Fehlern führen. Die Bitbreite der beiden Zähler ergibt sich hier beispielsweise aus den maximal zu zählenden Counts zwischen zwei Systemclockflanken, dem Auffangen von metastabilen Zuständen und der gewünschten Sicherheitsmarge.

Zum Beispiel werden nun mit dem Takt des System-Clocks die beiden aktuellen Zählerstände über ein Synchronisationsglied in ein gemeinsames System-Zählsystem überführt, wobei mit dem Takt des System-Clocks die beiden jeweils aktuellen Zählstände von ihren vorherigen Zählständen subtrahiert werden. Diese Differenzen sagen aus um wieviele "Counts" die beiden Eingangssignale ihre jeweiligen Zähler während der letzten System-Clock-Phase hochgezählt haben. Da die beiden Eingangs-Clockfrequenzen beispielsweise tiefer sind als die Systemfrequenz des System-Clocks können die sich ergebenden Differenzen nur die Werte 1 und 0 einnehmen. Mit dem Takt des System-Clocks werden diese beiden Differenzen nun beispielsweise voneinander subtrahiert und das Resultat, das die Werte -1, 0 und 1 annehmen kann, wird einem Summierer hinzuaddiert. Der Summierer enthält so eine Momentaufnahme der Interferometerdistanz, typischwerweise in Anzahl halber Wellenlängen seit Messstart.

Zum Beispiel kann der Referenz-Zähler, der Empfangs-Zähler, das System-Zählsystem, und das Synchronisationsglied derart ausgebildet sein, dass eine Repetierrate des Systems derart definiert ist, dass die Abtastung des Trägersignals periodisch mit einer definierten Anzahl Takte des System-Clocks wieder am exakt demselben Ort erfolgt.

Im obigen beispielhaften System wird nun mit jedem Takt des System-Clocks der aktuelle Wert des Summierers einem Integrierer hinzuaddiert und ein Modulozähler um eins erhöht. Erreicht der Modulozähler seinen Modulowert, der mit der Repetierrate des exemplarischen Systems übereinstimmt, so wird der Wert des Integrierers in ein Ausleseregister geschrieben und der Inhalt des Integrierers anschliessend gelöscht. Der Inhalt des Ausleseregisters enthält so das modulo-fache des eigentlichen Wertes.

Alternativ kann beispielsweise auch ein gleitender Mittelwert über n Mal den Modulowert gebildet werden, sodass beispielsweise mit jedem Takt des System-Clocks ein neues Resultat zur Verfügung steht.

Um eine Auflösungsverbesserung und eine Phaseninformation zu erhalten wird also gemäss der vorliegenden Erfindung beispielsweise der System-Clock vom Referenz-Clock für den Referenz-Zähler (und dem Empfangs-Clock für den Empfangs-Zähler) entkoppelt und dafür gesorgt, dass der System-Clock und der Referenz-Clock möglichst verschieden sind, wobei dem Addierer ein Integrator beigefügt wird. Beispielsweise kann die Frequenz des Referenz-Clocks mittels einer Phasenregelschleife generiert werden, z.B. mittels einer in einem FPGA (Field Programmable Gate Array) enthaltenen Phasenregelschleife (PLL, phase-locked loop. Dies erlaubt zumindest eine begrenzte Unabhängigkeit vom System-Clock.

Eine weitere Auflösungsverbesserung kann zudem dadurch erzeugt werden, dass der Referenz-Clock und der System-Clock optional verjittert werden.

In einer Ausführungsform sind der Referenz-Zähler, der Empfangs-Zähler, das System-Zählsystem, und das Synchronisationsglied beispielsweise derart konfiguriert, dass der Zählbereich als ein periodischer Zählbereich definiert ist, wodurch beispielsweise eine Repetierrate des Systems definiert ist, nämlich derart, dass das Trägersignal jeweils periodisch mit Anzahl Takten des Zählbereichs wieder an derselben Stelle abgetastet wird.

Eine weitere Ausführungsform bezieht sich darauf, dass die Ableitung der Entfernungsänderung periodisch mit einer Periode gleich der Anzahl Takte des Zählbereichs erfolgt, oder die Ableitung der Entfernungsänderung gleitend erfolgt, insbesondere mittels eines gleitenden Mittelwerts basierend auf einer fortlaufenden Integration der System-Zählstände.

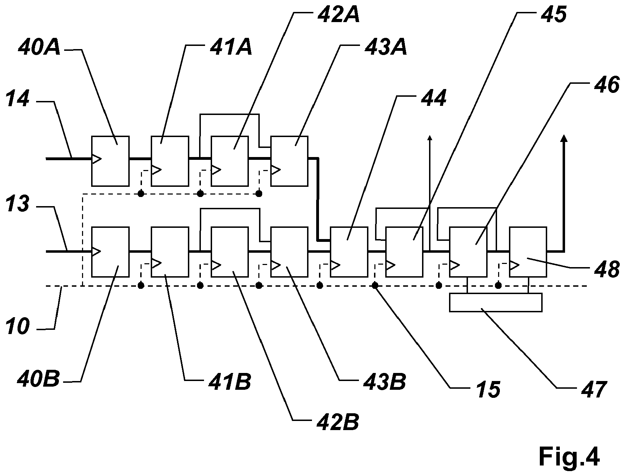

Zum Beispiel beträgt die Systemfrequenz 100 MHz und die daraus abgeleitete Trägerfrequenz für einen akusto-optischen Modulator (AOM) sei 100 MHz $\times$ 31/52 = 59.615 MHz (basierend auf einem 32-Bit Summierer, 4-Bit Subtrahierer und einem 48-Bit Integrator, siehe z.B. Ausführungsform in Fig. 4), wobei die Abtastung des Trägersignals nach 52 Takten des System-Clocks wieder an exakt demselben Ort erfolgt. Die Auflösung dieses Systems ist daher gegeben durch 1/52 $\times$ 1/2 der Wellenlänge der Messstrahlung.

Eine weitere Ausführungsform bezieht sich darauf, dass eine Integration des Zählerverlaufs des System-Zählsystems mittels eines über mehrere Takte des System-Zählsystems automatisierten Integrationsvorgangs erfolgt, wobei der Integrationsvorgang folgende Schritte umfasst: Erzeugen einer Empfangs-Differenz durch Differenzbildung zwischen zwei Empfangs-Zählständen, insbesondere zwischen zwei unmittelbar aufeinander folgenden Empfangs-Zählständen; Erzeugen einer Referenz-Differenz durch Differenzbildung zwischen zwei Referenz-Zählständen, insbesondere zwischen zwei unmittelbar aufeinander folgenden Referenz-Zählständen; Erzeugen eines Summanden für die Addition in einem Summierer, wobei der Summand erzeugt wird durch Differenzbildung zwischen der Empfangs-Differenz und der Referenz-Differenz; und Integration des Zählerverlaufs mittels eines Integrators, basierend auf dem Summanden. Zum Beispiel erfolgt dabei die Integration jeweils periodisch über die Anzahl Takte des periodischen Zählbereichs.

Gemäss einer weiteren Ausführungsform der Erfindung weist das Trägersignal einen definierten Jitter der Trägerfrequenz auf und/oder ein definierter Jitter der Systemfrequenz wird erzeugt, beispielsweise durch Verjitterung des System-Clocks. Zum Beispiel werden das Trägersignal und/oder die Systemfrequenz derart konfiguriert, dass sie einen minimalen Periodenjitter von $1/(2 \times f_s \times n_{mod})$ aufweist, wobei $f_s$ die Systemfrequenz ist und $n_{mod}$ die Anzahl Takte des periodischen Zählbereichs.

Dabei sollte beispielsweise darauf geachtet werden, dass für ein Verrauschen des Referenz-Clocks und/oder des System-Clocks das Modulationssignal jeweils durch ein weisses Rauschen oder ein dreieckähnliches Signal gegeben ist, dessen Peak-Amplitude gemäss obigem Beispiel z.B. einen minimalem Periodenjitter von

$$\pm 1/(2 \times 100 \text{ MHz} \times 52) = \pm 100 \text{ psek hervorruft.}$$

Die Erfindung betrifft weiter ein Messgerät zum Bestimmen einer Entfernungsänderung zu einem retro-reflektierenden Ziel mittels Interferometrie, mit einer Strahlungsquelle zur Erzeugung einer Strahlung mit einer definierten Wellenlänge, einem Referenzkanal und einem Messkanal die konfiguriert sind, dass zumindest ein Teil der mit der Strahlungsquelle erzeugten Strahlung über den Referenzkanal als Referenzstrahlung verwendet werden kann und zumindest ein Teil der mit der Strahlungsquelle erzeugten Strahlung über den Messkanal als Messstrahlung zum Ziel ausgesendet werden kann. Das Messgerät weist ferner einen mit einem Trägersignal angesteuerbaren Frequenzschieber auf, insbesondere ein akusto-optischer Modulator, der konfiguriert ist zum Erzeugen einer Frequenzverschiebung eines Teils von mindestens einem der Messstrahlung, der Referenzstrahlung, und einer Empfangsstrahlung, welche auf zumindest einem Teil der vom Ziel zurückkommenden Messstrahlung basiert, basierend auf einer Trägerfrequenz des Trägersignals. Das Messgerät weist ferner einen Empfänger auf, z.B. einen lichtempfindlichen Detektor basierend auf einer Photodiode mit entsprechender Signalverarbeitungselektronik, der konfiguriert ist zum Erfassen eines Überlagerungssignals basierend auf zumindest einem Teil der Empfangsstrahlung und der Referenzstrahlung und zur Bereitstellung eines Interferometerausgangssignals mit einer Interferometerausgangsfrequenz, nachfolgend IFM-Frequenz genannt, basierend auf dem Überlagerungssignal. Das Messgerät weist zudem eine Schaltung auf mit einem Empfangs-Zähler der konfiguriert ist für eine Erfassung der IFM-Frequenz durch Empfangs-Zählstände, einem Referenz-Zähler der konfiguriert ist für eine Erfassung der Trägerfrequenz durch Referenz-Zählstände, einen System-Zählsystem, basierend auf einem System-Clock mit einer Systemfrequenz, das konfiguriert ist zur Bereitstellung eines gemeinsamen Zählsystems, und einem Synchronisationsglied das konfiguriert ist zur Überführung der Empfangs-Zählstände und der Referenz-Zählstände in das gemeinsame System-Zählsystem. Mittels einer Recheneinheit die konfiguriert ist zum Ableiten der Entfernungsänderung basierend auf der IFM-Frequenz und der Trägerfrequenz, insbesondere basierend auf dem Doppler-Effekt, nämlich basierend auf diskreten positiven und negativen Werten eines Wellenlängeninkrements, welches im Wesentlichen als ein ganzzahliges Vielfaches der halben Wellenlänge der Messstrahlung gegeben ist, wird basierend auf System-Zählständen des System-Zählsystems eine aktuelle Entfernungsänderung zum Ziel abgeleitet.

Gemäss der vorliegenden Erfindung ist das Messgerät zudem derart konfiguriert, dass die Systemfrequenz sich von der Trägerfrequenz durch eine definierte Differenzfrequenz unterscheidet und ein Zählerverlauf des System-Zählsystems über einen durch mehrere Takte des System-Zählsystems definierten Zählbereich bereitgestellt wird, wobei die Recheneinheit derart konfiguriert ist, dass die Ableitung der Entfernungsänderung unter Berücksichtigung des Zählerverlaufs erfolgt. Zum Beispiel weist die Schaltung dazu ferner einen Integrator auf für eine Integration des Zählerverlaufs über den definierten Zählbereich.

Zum Beispiel kann die Systemfrequenz in einer Ausführungsform grösser sein als 50 MHz, insbesondere grösser als 100 MHz, im Speziellen grösser als 200 MHz. Im Allgemeinen kann die Systemfrequenz dabei grösser oder kleiner sein als die Trägerfrequenz.

Als Empfangs-Zähler und/oder Referenz-Zähler können beispielsweise Zähler basierend auf einem Grey-Code-Zähler, insbesondere einem Johnson-Zähler, verwendet werden.

Gemäss der vorliegenden Erfindung wird also zum Beispiel der System-Clock vom Referenz-Clock des Referenz-Zählers (und/oder dem Empfangs-Clock des Empfangs-Zählers) entkoppelt und dafür gesorgt, dass der System-Clock und der Referenz-Clock möglichst verschieden sind.

In einer Ausführungsform des Messgeräts sind der Referenz-Zähler, der Empfangs-Zähler, das System-Zählsystem, und das Synchronisationsglied derart konfiguriert, dass der Zählbereich als ein periodischer Zählbereich definiert ist, wodurch beispielsweise eine Repetierrate des Systems definiert ist, nämlich derart, dass das Trägersignal jeweils periodisch mit Anzahl Takten des Zählbereichs wieder an derselben Stelle abgetastet wird.

Eine weitere Ausführungsform bezieht sich darauf, dass die Schaltung und die Recheneinheit derart konfiguriert sind, dass die Ableitung der Entfernungsänderung periodisch mit einer Periode gleich der Anzahl Takte des Zählbereichs erfolgt oder die Ableitung der Entfernungsänderung gleitend erfolgt, insbesondere mittels eines gleitenden Mittelwerts basierend auf einer fortlaufenden Integration der System-Zählstände mittels eines Integrators.

Gemäss einer weiteren Ausführungsform weist die Schaltung einen Integrator auf und ist derart konfiguriert, dass eine Integration des Zählerverlaufs des System-Zählsystems mittels eines über mehrere Takte des System-Zählsystems automatisierten Integrationsvorgangs erfolgt, wobei der Integrationsvorgang folgende Schritte umfasst: Erzeugen einer Empfangs-Differenz durch Differenzbildung zwischen zwei Empfangs-Zählständen, insbesondere zwischen zwei unmittelbar aufeinander folgenden Empfangs-Zählständen; Erzeugen einer Referenz-Differenz durch Differenzbildung zwischen zwei Referenz-Zählständen, insbesondere zwischen zwei unmittelbar aufeinander folgenden Referenz-Zählständen; Erzeugen eines Summanden für die Addition in einem Summanden, wobei der Summand erzeugt wird durch Differenzbildung zwischen der Empfangs-Differenz und der Referenz-Differenz; und Integration des Zählerverlaufs mittels des Integrators, basierend auf dem Summanden. Zum Beispiel kann die Integration dabei jeweils periodisch über die Anzahl Takte des periodischen Zählbereichs erfolgen.

Beispielsweise zur weiteren Auflösungsverbesserung kann das Trägersignal zum Beispiel derart konfiguriert sein, dass das Trägersignal ein definierter Jitter der Trägerfrequenz aufweist, beispielsweise wobei der Referenz-Clock des Trägersignals verjittert wird, und/oder die Schaltung kann beispielsweise derart konfiguriert sein, dass ein definierter Jitter der Systemfrequenz erzeugt wird, beispielsweise durch Verjitterung des System-Clocks. Zum Beispiel kann die Verjitterung derart erfolgen, dass die Trägerfrequenz und/oder die Systemfrequenz einen minimalen Periodenjitter von $1/(2\times f_s \times n_{mod})$ aufweisen, wobei $f_s$ die Systemfrequenz ist und $n_{mod}$ die Anzahl Takte des periodischen Zählbereichs.

Die erfindungsgemässe Distanzmessverfahren und das erfindungsgemässe Distanzmessgerät werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen

Fig. 1:    Prinzipiendarstellung einer (homdynen) Interferometeranordnung;

Fig. 2:    Prinzipiendarstellung einer heterodynen Interferometeranordnung gemäss der vorliegenden Erfindung;

Fig. 3:    Prinzipiendarstellung einer erfindungsgemässen Ableitung einer Entfernungsänderung;

Fig. 4:    beispielhafte Ausführungsform einer erfindungsgemässen Schaltung für die Ableitung einer Entfernungsänderung.

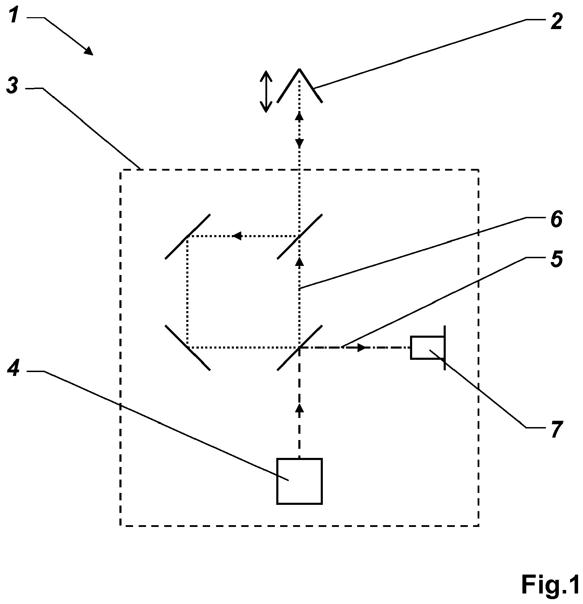

**Figur 1** zeigt einen prinzipiellen Aufbau einer beispielhaften Interferometeranordnung 1 mit einem Ziel 2 für ein Messgerät 3, insbesondere für einen Lasertracker. Mittels der Strahlquelle 4, welche beispielsweise als Laserdiode oder Gaslaserquelle mit jeweils grosser Kohärenzlänge ausgebildet ist, wird eine Messstrahlung erzeugt, welche mit Strahlteilern zum einen auf einem Referenzpfad 5 als Referenzstrahlung und zum anderen auf einem Sendepfad 6 als Sendestrahlung geführt wird. Die Sendestrahlung wird auf das retro-reflektierende Ziel 2 gerichtet und dort zum Interferometeraufbau 3 zurück reflektiert. Eine Entfernungsänderung zum Interferometer ist dabei mittels des Interferometerempfängers 7 feststellbar und messbar. Auf dem Interferometerempfänger 7 werden hierzu die Referenzstrahlung und die vom Ziel 2 zurückkommenden Teile der Sendestrahlung überlagert, wodurch diese Strahlen interferieren und zeitlich aufgelöst einen Interferenzverlauf als Ausgangsgrössenverlauf erzeugen, welcher vermittels des Interferometerempfängers 7 auslesbar ist.

Bei Stattfinden einer Bewegung des Ziels 2 relativ zur Interferometeranordnung des Messgeräts 3 derart, dass zumindest eine Distanz zwischen dem Ziel 2 und dem Aufbau 3 verändert wird, kann mittels des Interferometerempfängers 7 eine Veränderung des Interferenzverlaufs (Ausgangsgrössenverlaufs) erfasst werden. Dabei kann beispielsweise eine alternierende Abfolge von durch die Interferenz erzeugten Intensitätsmaxima und Intensitätsminima detektiert werden. In diesem Zusammenhang können so genannte Interferometerpulse (Wellenlängeninkremente), z.B. erfasste Maxima und/oder Minima, ausgelesen und fortlaufend gezählt werden, sodass anhand einer bestimmten Anzahl von Pulsen eine Entfernungsänderung zwischen Ziel 2 und Interferometeraufbau 3 bestimmt werden kann. Die maximal erreichbare Distanzauflösung ist dabei im Wesentlichen limitiert durch die halbe Wellenlänge der Sendestrahlung, da die Sendestrahlung zum Ziel 2 und zurück zweimal denselben Weg zurücklegen muss.

Eine solche Ausführungsform kann als (klassisches) homodynes Interferometer betrachtet werden. In einer speziellen Ausführungsform kann die Bestimmung der Entfernungsänderung hierzu beispielsweise mittels Quadraturdetektion erfolgen.

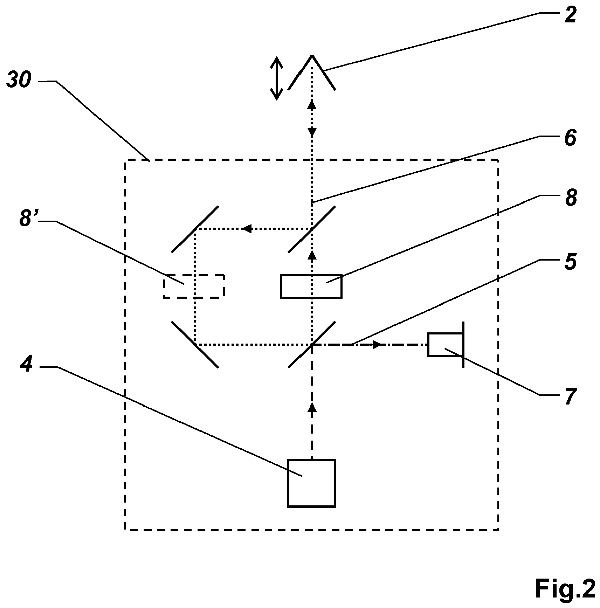

**Figur 2** zeigt eine Ausführungsform eines erfindungsgemässen Messgeräts 30 als heterodynes Interferometer (z.B. heterodynes Michelson-Interferometer). Dabei werden in den beiden Armen des Interferometers (Sendepfad 6 und Referenzpfad 5) jeweils Strahlungen verwendet, welche sich leicht hinsichtlich der Wellenlänge durch eine Differenzwellenlänge unterscheiden, beispielsweise erzeugt durch einen mit einem Trägersignal (mit einer Trägerfrequenz) angesteuerten akusto-optischen Modulator 8, wie hier beispielsweise angeordnet im Sendepfad 6. Alternativ wäre auch eine Anordnung eines einzelnen akusto-optischen Modulators 8' im Empfangspfad, im Referenzpfad 5 (nicht gezeigt) oder eine Kombination von mehreren unterschiedlich angeordneten Modulatoren im Sende-, Empfangs- und/oder Referenzpfad möglich (nicht gezeigt).

Zur Erzeugung der Strahlungen mit unterschiedlichen Wellenlängen (Frequenzschiebungen) können beispielsweise den Zeeman-Effekt nutzende Laser (z.B. Mehrfrequenzlaser) oder, wie im gezeigten Beispiel, akusto-optische Modulatoren eingesetzt werden.

Durch den Modulator wird beispielsweise eine Sendestrahlung mit einer ersten Wellenlänge (respektive einer ersten Frequenz) und eine Referenzstrahlung mit einer zweiten Wellenlänge (respektive einer zweiten Frequenz) erzeugt, wobei die Sendestrahlung entlang des Sendepfads 6 zum Ziel 2 ausgesendet und zumindest Teile der Sendestrahlung vom Ziel 2 zurück zum Interferometer 30 reflektiert werden. Die zurückkommenden Teile der Sendestrahlung werden mit der Referenzstrahlung überlagert, welche den Referenzpfad 5 durchlaufen hat, wodurch ein Schwebungssignal mit einer Schwebefrequenz (Empfangsfrequenz, IFM-Frequenz) erzeugt wird, welches mit einem Interferometerdetektor 7 erfasst werden kann. Durch eine fortlaufende Erfassung der Schwebefrequenz kann beispielsweise ein zeitlich aufgelöster Schwebungsverlauf erfasst werden.

Basierend auf dem Schwebungsverlauf der Schwebefrequenz und der Trägerfrequenz des Modulators kann die Distanz zum Ziel mittels Aufsummieren von diskreten Werten eines Wellenlängeninkrements abgeleitet werden, wobei das Wellenlängeninkrement im Wesentlichen als ein ganzzahliges Vielfaches der halben Wellenlänge der Sendestrahlung gegeben ist.

Weiter kann beispielsweise die Richtung für die Entfernungsänderung anhand des zeitlichen Verlaufs der Schwebefrequenz unter Ausnutzung des Doppler-Effekts abgeleitet werden. Zum Beispiel - in einem einfachen Fall wie im beschriebenen Interferometer-Aufbau - entspricht die Schwebefrequenz bei konstanter Entfernung zum Ziel 2 im Wesentlichen gerade der Differenzfrequenz zwischen der Sendestrahlung und der Referenzstrahlung, wobei die Differenzfrequenz der Trägerfrequenz des verwendeten akusto-optischen Modulators 8 entspricht. Bei einer gleichmässigen Bewegung des Ziels 2 über eine vorgegebene Zeitperiode erfährt die Schwebefrequenz einen richtungsabhängigen Frequenzoffset. Ist die Distanz abnehmend, ist die Schwebefrequenz grösser als die Differenzfrequenz, wohingegen die Schwebefrequenz bei zunehmender Entfernung kleiner als die Differenzfrequenz ist.

Im Rahmen des Ermittelns der Entfernung zum Ziel 2 werden die Schwebefrequenz (IFM-Frequenz) durch Empfangs-Zählstände eines Empfangs-Zählers erfasst und die Trägerfrequenz durch Referenz-Zählstände eines Referenz-Zählers erfasst, insbesondere mittels Johnson-Zählern, wobei die Empfangs-Zählstände und die Referenz-Zählstände mittels eines Synchronisationsglieds basierend auf einem System-Clock mit einer Systemfrequenz in ein gemeinsames Zählsystem eines System-Zählsystems überführt werden, wobei sich die Systemfrequenz gemäss der Erfindung von der Trägerfrequenz unterscheidet und die Ableitung der Entfernungsänderung unter Berücksichtigung eines Zählerverlaufs des System-Zählsystems über einen durch mehrere Takte des System-Zählsystems definierten Zählbereich erfolgt.

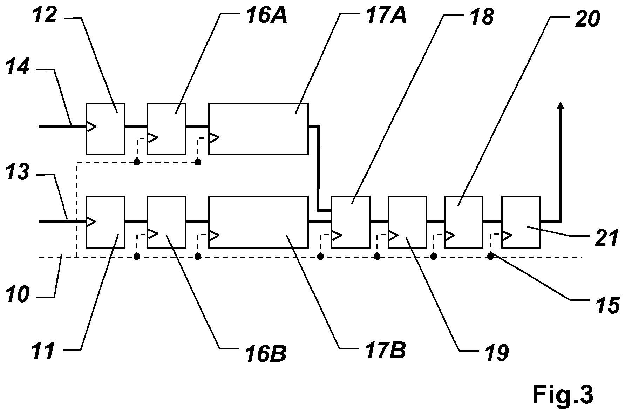

**Figur 3** zeigt schematisch eine erfindungsgemässe Ausführungsform einer Ableitung einer Entfernungsänderung zu einem Ziel, basierend auf einer heterodynen Interferometeranordnung 30 (Fig. 2), beispielsweise mit einem Frequenzschieber 8 im Sendepfad 6 und einem Interferometerdetektor 7 für eine Erfassung und Bereitstellung des Interferometer-Ausgangssignals (mit einer Interferometerausgangsfrequenz, IFM-Frequenz genannt) basierend auf einer Schwebung mit einer Schwebefrequenz (IFM-Frequenz) generiert durch eine Überlagerung der zurückkommenden Teile des Sendesignals mit dem Referenzsignal.

Als Basis der Datenverarbeitung dient ein System-Clock 10, wobei die Trägerfrequenz und die IFM-Frequenz jeweils durch vom System-Clock 10 entkoppelte Referenz-Zähler 11, respektive Empfangs-Zähler 12 erfasst werden. Erfindungsgemäss ist zudem dafür gesorgt, dass der System-Clock 10 und der Referenz-Clock 13 des Referenz-Zählers 11 verschieden sind, respektive dass der System-Clock 10 und der Empfangsclock 14 des Empfangszählers 12 verschieden sind.

Basierend auf dem Takt 15 des System-Clocks 10 werden die Zählstände des Referenz-Zählers 11 und des Empfangszählers 12 jeweils mittels eines Synchronisationsglieds in Register 16A,B eines gemeinsamen durch den System-Clock 10 definiertes Zählsystem (System-Zählsystem) überführt. Mittels einer Speicher- und Subtraktionseinheit 17A,B für den Empfangskanal 17A und den Referenzkanal 17B wird eine Empfangs-Differenz erzeugt durch Subtraktion eines Empfangs-Zählstands von einem, z.B. unmittelbar, vorhergehenden Empfangs-Zählstand, respektive wird eine Referenz-Differenz erzeugt durch Subtraktion eines Referenz-Zählstands von einem, z.B. unmittelbar, vorhergehenden Referenz-Zählstand. Mittels einer weiteren Speicher- und Subtraktionseinheit 18 wird ein Summand erzeugt durch Subtraktion einer Empfangs-Differenz von einer Referenz-Differenz. Der Summand wird beispielsweise mit jedem Systemtakt 15 einem Summierer 19 zugeführt, dessen Werte wiederum basierend auf dem Systemtakt 15 einem Integrator 20 zugeführt werden. Nach einer entsprechenden Integration über eine definierte Anzahl Takte, beispielsweise periodisch als Funktion einer definierten Anzahl Takte oder gleitend, wird der Wert des Integrators 20 in ein Ausleseregister 21 geschrieben, wobei die Ableitung der Entfernungsänderung unter Berücksichtigung des Integrationswerts im Ausleseregister 21 erfolgt.

**Figur 4** zeigt schematisch eine Ausführungsform einer erfindungsgemässen Schaltung mit einer System-Clock 10 als Basis für die Auswertung, wobei hier beispielsweise die Trägerfrequenz 13 und die IFM-Frequenz 14 jeweils durch vom System-Clock 10 entkoppelte Johnson-Zähler 40A,B - beispielsweise 4-Bit Johnson-Zähler - erfasst werden. Mit dem Takt 15 des System-Clocks 10 werden die Zählstände des Referenz-Zählers 40B und des Empfangszählers 40A jeweils mittels einer Synchronisation jeweils in ein erstes Register 41A,B - beispielsweise 4-Bit Register - überführt, respektive die vorherigen Werte des ersten Registers 41A,B jeweils in ein weiteres Register 42A,B geschoben, so dass jeweils mittels eines Subtrahierers 43A,B - beispielweise 4-Bit Subtrahierer - eine Empfangs-Differenz 43A und eine Referenz-Differenz 43B erzeugt werden und durch einen weiteren Subtrahierer 44 - beispielsweise ein 4-Bit Subtrahierer - ein Summand erzeugt wird.

Die Empfangs-Differenz und die Referenz-Differenz sagen aus um wieviele Counts die beiden Eingangsfrequenzen ihre jeweiligen Zähler während der letzten Systemclockphase hochgezählt haben. Typischerweise sind die beiden Eingangsclocks 13,14 tiefer als der System-Clock 10, weshalb die sich ergebenden Differenzen nur die Werte 1 und 0 einnehmen.

Die Summanden werden hier beispielsweise einem 32-Bit Summierer 45 hinzugefügt, wobei die Summanden jeweils die Werte -1, 0 und 1 annehmen können. Der Summierer 45 enthält so eine Momenaufnahme der Interferometerdistanz in Anzahl halber Wellenlängen seit Messstart.

Die Summanden werden hier über den Summierer 45 weiter beispielsweise einem 48-Bit Integrator 46 zugeführt, wobei die Trägerfrequenz 13 und die Synchronisationsfrequenz 10 hier weiter derart bereitgestellt sind, dass eine Repetierrate des Systems derart definiert ist, dass das Trägersignal jeweils periodisch mit der Repetierrate des Systems wieder an derselben Stelle abgetastet wird. Zum Beispiel entspricht die Trägerfrequenz einem Faktor 31/52 der Systemfrequenz (basierend auf einem 32-Bit Summierer, 4-Bit Subtrahierer und einem 48-Bit Integrator), wodurch nach 52 Takten des System-Clocks 10 die Abtastung des Trägersignals wieder am exakt selben Ort erfolgt.

Mit jedem Takt 15 des System-Clocks 10 wird der aktuelle Wert des Summierers 45 zum Integrator 46 addiert und ein Modulozähler 47 um eins erhöht. Erreicht der Modulozähler 47 seinen Modulowert, der mit der Repetierrate des exemplarischen Systems übereinstimmt, hier 52, so wird der Wert des Integrators 46 in ein Ausleseregister 48 - hier ein 48-Bit Register - geschrieben und der Inhalt des Integrators 46 wird gelöscht. Der Inhalt des Ausleseregisters 48 enthält also das modulo-fache des eigentlichen Distanzwerts als Funktion des Wellenlängeninkrements.

Alternativ kann auch ein gleitender Mittelwert über n Mal den Modulowert gebildet werden, sodass mit jedem Takt 15 des System-Clocks 10 ein neues Resultat zur Verfügung steht.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

**Patentansprüche**

1.  Verfahren zum Bestimmen einer Entfernungsänderung zu einem retro-reflektierenden Ziel (2) mittels Interferometrie, mit

    • einem Erzeugen einer Strahlung mit einer definierten Frequenz, wobei

        o zumindest ein Teil der Strahlung als Referenzstrahlung verwendet wird und
        o zumindest ein Teil der Strahlung als Messstrahlung zum Ziel (2) ausgesendet wird,

    • einer Frequenzverschiebung eines Teils von mindestens einem der Messstrahlung, der Referenzstrahlung, und einer Empfangsstrahlung, welche zumindest auf einem Teil der vom Ziel (2) zurückkommmenden Messstrahlung basiert, wobei die Frequenzverschiebung erzeugt wird mittels eines mit einem Trägersignal angesteuerten Frequenzschiebers (8,8'), insbesondere eines akusto-optischen Modulators, wobei das Trägersignal eine Trägerfrequenz aufweist,
    • einem Erfassen eines Überlagerungssignals basierend auf zumindest einem Teil der Empfangsstrahlung und der Referenzstrahlung,
    • einem Erzeugen eines Interferometerausgangssignals mit einer Interferometerausgangsfrequenz, nachfolgend IFM-Frequenz genannt, basierend auf dem Überlagerungssignal, und
    • einem Ableiten der Entfernungsänderung basierend auf der IFM-Frequenz und der Trägerfrequenz, insbesondere basierend auf dem Doppler-Effekt, nämlich basierend auf diskreten positiven und negativen Werten eines Wellenlängeninkrements, welches im Wesentlichen als ein ganzzahliges Vielfaches der halben Wellenlänge der Messstrahlung gegeben ist,

    wobei für das Ableiten der Entfernungsänderung

        • die IFM-Frequenz durch Empfangs-Zählstände eines Empfangs-Zählers (12,40A) erfasst wird,
        • die Trägerfrequenz durch Referenz-Zählstände eines Referenz-Zählers (11,40B) erfasst wird, und
        • die Empfangs-Zählstände und die Referenz-Zählstände mittels eines Synchronisationsglieds basierend auf einem System-Clock (10) mit einer Systemfrequenz in ein gemeinsames System-Zählsystem überführt werden, dass basierend auf System-Zählständen des System-Zählsystems eine aktuelle Entfernungsänderung zum Ziel (2) abgeleitet wird,

    **dadurch gekennzeichnet, dass**

        • die Systemfrequenz sich von der Trägerfrequenz durch eine definierte Differenzfrequenz unterscheidet, und
        • die Ableitung der Entfernungsänderung unter Berücksichtigung eines Zählerverlaufs des System-Zählsystems über einen durch mehrere Takte (15) des System-Zählsystems definierten Zählbereich erfolgt, insbesondere mittels einer Integration des Zählerverlaufs über den definierten Zählbereich.

2.  Verfahren nach Anspruch 1,
    **dadurch gekennzeichnet, dass**
    der Referenz-Zähler (11,40B), der Empfangs-Zähler (12,40A), das System-Zählsystem, und das Synchronisationsglied derart konfiguriert sind, dass der Zählbereich als ein periodischer Zählbereich definiert ist, nämlich derart, dass das Trägersignal jeweils periodisch mit Anzahl Takten des Zählbereichs wieder an derselben Stelle abgetastet wird.

3.  Verfahren nach einem der bisherigen Ansprüche,
    **dadurch gekennzeichnet, dass**

        • die Ableitung der Entfernungsänderung periodisch mit einer Periode gleich der Anzahl Takte des Zählbereichs erfolgt, oder

• die Ableitung der Entfernungsänderung gleitend erfolgt, insbesondere mittels eines gleitenden Mittelwerts basierend auf einer fortlaufenden Integration der System-Zählstände.

4. Verfahren nach einem der bisherigen Ansprüche,
**dadurch gekennzeichnet, dass**
eine Integration des Zählerverlaufs des System-Zählsystems mittels eines über mehrere Takte (15) des System-Zählsystems automatisierten Integrationsvorgangs erfolgt, wobei der Integrationsvorgang folgende Schritte umfasst

• Erzeugen einer Empfangs-Differenz durch Differenzbildung (17A,43A) zwischen zwei Empfangs-Zählständen, insbesondere zwischen zwei unmittelbar aufeinander folgenden Empfangs-Zählständen,
• Erzeugen einer Referenz-Differenz durch Differenzbildung (17B,43B) zwischen zwei Referenz-Zählständen, insbesondere zwischen zwei unmittelbar aufeinander folgenden Referenz-Zählständen,
• Erzeugen eines Summanden (18,44) für die Addition in einem Summierer (19,45), wobei der Summand erzeugt wird durch Differenzbildung zwischen der Empfangs-Differenz und der Referenz-Differenz,
• Integration des Zählerverlaufs mittels eines Integrators (20,46), basierend auf dem Summanden (18,44),

insbesondere wobei die Integration jeweils periodisch über die Anzahl Takte des periodischen Zählbereichs erfolgt.

5. Verfahren nach einem der bisherigen Ansprüche,
**dadurch gekennzeichnet, dass**
das Trägersignal einen definierten Jitter der Trägerfrequenz aufweist und/oder dass ein definierter Jitter der Systemfrequenz erzeugt wird,
insbesondere derart, dass die Trägerfrequenz und/oder die Systemfrequenz einen minimalen Periodenjitter von $1/(2 \times f_s \times n_{mod})$ aufweisen, wobei $f_s$ die Systemfrequenz ist und $n_{mod}$ die Anzahl Takte des periodischen Zählbereichs.

6. Verfahren nach einem der bisherigen Ansprüche,
**dadurch gekennzeichnet, dass**
die Systemfrequenz grösser ist als 50 MHz, insbesondere grösser als 100 MHz, im Speziellen grösser als 200 MHz, insbesondere wobei die Systemfrequenz grösser ist als die Trägerfrequenz.

7. Verfahren nach einem der bisherigen Ansprüche,
wobei der Empfangs-Zähler (12,40A) und/oder der Referenz-Zähler (11,40B) auf einem Grey-Code-Zähler, insbesondere einem Johnson-Zähler, basiert.

8. Messgerät zum Bestimmen einer Entfernungsänderung zu einem retro-reflektierenden Ziel (2) mittels Interferometrie, mit

• einer Strahlungsquelle (4) zur Erzeugung einer Strahlung mit einer definierten Wellenlänge,
• einem Referenzkanal (5) und einem Messkanal (6) die konfiguriert sind, dass zumindest ein Teil der mit der Strahlungsquelle (4) erzeugten Strahlung über den Referenzkanal (5) als Referenzstrahlung verwendet werden kann und zumindest ein Teil der mit der Strahlungsquelle (4) erzeugten Strahlung über den Messkanal (6) als Messstrahlung zum Ziel ausgesendet werden kann,
• einem mit einem Trägersignal ansteuerbaren Frequenzschieber (8,8'), insbesondere ein akusto-optischer Modulator, der konfiguriert ist zum Erzeugen einer Frequenzverschiebung eines Teils von mindestens einem der Messstrahlung, der Referenzstrahlung, und einer Empfangsstrahlung, welche auf zumindest einem Teil der vom Ziel (2) zurückkommmenden Messstrahlung basiert, basierend auf einer Trägerfrequenz des Trägersignals,
• einem Empfänger (7) der konfiguriert ist

o zum Erfassen eines Überlagerungssignals basierend auf zumindest einem Teil der Empfangsstrahlung und der Referenzstrahlung, und
o zur Bereitstellung eines Interferometerausgangssignals mit einer Interferometerausgangsfrequenz, nachfolgend IFM-Frequenz genannt, basierend auf dem Überlagerungssignal,

• einer Schaltung mit

o einem Empfangs-Zähler (12,40A) der konfiguriert ist für eine Erfassung der IFM-Frequenz durch Empfangs-Zählstände,
o einem Referenz-Zähler (11,40B) der konfiguriert ist für eine Erfassung der Trägerfrequenz durch Referenz-Zählstände,

o einem System-Zählsystem, basierend auf einem System-Clock (10) mit einer Systemfrequenz, das konfiguriert ist zur Bereitstellung eines gemeinsamen Zählsystems, und

o einem Synchronisationsglied das konfiguriert ist zur Überführung der Empfangs-Zählstände und der Referenz-Zählstände in das System-Zählsystem,

• einer Recheneinheit die konfiguriert ist zum Ableiten der Entfernungsänderung basierend auf der IFM-Frequenz und der Trägerfrequenz, insbesondere basierend auf dem Doppler-Effekt, nämlich basierend auf diskreten positiven und negativen Werten eines Wellenlängeninkrements, welches im Wesentlichen als ein ganzzahliges Vielfaches der halben Wellenlänge der Messstrahlung gegeben ist, wobei basierend auf System-Zählständen des System-Zählsystems eine aktuelle Entfernungsänderung zum Ziel (2) abgeleitet wird,

**dadurch gekennzeichnet, dass**
das Messgerät derart konfiguriert ist, dass

• die Systemfrequenz sich von der Trägerfrequenz durch eine definierte Differenzfrequenz unterscheidet, und
• ein Zählerverlauf des System-Zählsystems über einen durch mehrere Takte (15) des System-Zählsystems definierten Zählbereich bereitgestellt wird,

wobei die Recheneinheit derart konfiguriert ist, dass die Ableitung der Entfernungsänderung unter Berücksichtigung des Zählerverlaufs erfolgt,
insbesondere wobei die Schaltung einen Integrator (20,46) aufweist für eine Integration des Zählerverlaufs über den definierten Zählbereich.

9. Messgerät nach Anspruch 8,
**dadurch gekennzeichnet, dass**
der Referenz-Zähler (11,40B), der Empfangs-Zähler (12,40A), das System-Zählsystem, und das Synchronisationsglied derart konfiguriert sind, dass der Zählbereich als ein periodischer Zählbereich definiert ist, nämlich derart, dass das Trägersignal jeweils periodisch mit Anzahl Takten des Zählbereichs wieder an derselben Stelle abgetastet wird.

10. Messgerät nach Anspruch 8 oder 9,
**dadurch gekennzeichnet, dass**
die Schaltung und die Recheneinheit derart konfiguriert sind, dass

• die Ableitung der Entfernungsänderung periodisch mit einer Periode gleich der Anzahl Takte des Zählbereichs erfolgt, oder
• die Ableitung der Entfernungsänderung gleitend erfolgt, insbesondere mittels eines gleitenden Mittelwerts basierend auf einer fortlaufenden Integration der System-Zählstände mittels eines Integrators (20,46).

11. Messgerät nach einer der Ansprüche 8 bis 10,
**dadurch gekennzeichnet, dass**
die Schaltung einen Integrator (20,46) aufweist und derart konfiguriert ist, dass eine Integration des Zählerverlaufs des System-Zählsystems mittels eines über mehrere Takte (15) des System-Zählsystems automatisierten Integrationsvorgangs erfolgt, wobei der Integrationsvorgang folgende Schritte umfasst

• Erzeugen einer Empfangs-Differenz durch Differenzbildung (17A,43A) zwischen zwei Empfangs-Zählständen, insbesondere zwischen zwei unmittelbar aufeinander folgenden Empfangs-Zählständen,
• Erzeugen einer Referenz-Differenz durch Differenzbildung (17B,43B) zwischen zwei Referenz-Zählständen, insbesondere zwischen zwei unmittelbar aufeinander folgenden Referenz-Zählständen,
• Erzeugen eines Summanden (18,44) für die Addition in einem Summierer (19,45), wobei der Summand erzeugt wird durch Differenzbildung zwischen der Empfangs-Differenz und der Referenz-Differenz, und
• Integration des Zählerverlaufs mittels des Integrators (20,46), basierend auf dem Summanden (18,44),

insbesondere wobei die Integration jeweils periodisch über die Anzahl Takte des periodischen Zählbereichs erfolgt.

12. Messgerät nach einem der Ansprüche 8 bis 11,
**dadurch gekennzeichnet, dass**
das Trägersignal derart konfiguriert ist, dass das Trägersignal ein definierter Jitter der Trägerfrequenz aufweist und/oder dass die Schaltung derart konfiguriert ist, dass ein definierter Jitter der Systemfrequenz erzeugt wird, insbesondere derart, dass die Trägerfrequenz und/oder die Systemfrequenz einen minimalen Periodenjitter von $1/(2 \times f_s \times n_{mod})$ aufweisen, wobei $f_s$ die Systemfrequenz ist und $n_{mod}$ die Anzahl Takte des periodischen Zählbereichs.

**13.** Messgerät nach einem der Ansprüche 8 bis 12,
**dadurch gekennzeichnet, dass**
die Schaltung derart konfiguriert ist, dass die Systemfrequenz grösser ist als 50 MHz, insbesondere grösser als 100 MHz, im Speziellen grösser als 200 MHz, insbesondere wobei die Systemfrequenz grösser ist als die Trägerfrequenz.

**14.** Messgerät nach einem der Ansprüche 8 bis 13,
wobei der Empfangs-Zähler (12,40A) und/oder der Referenz-Zähler (11,40B) auf einem Grey-Code-Zähler, insbesondere einem Johnson-Zähler, basiert.

**Fig.1**

Fig.2

Fig.3

Fig.4

**Europäisches Patentamt**
**European Patent Office**
**Office européen des brevets**

## EUROPÄISCHER RECHERCHENBERICHT

Nummer der Anmeldung

EP 17 16 6662

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 634 594 A1 (LEICA GEOSYSTEMS AG [CH]) 4. September 2013 (2013-09-04) * Abbildungen 3,4 * * Absätze [0045], [0109] - [0113] * | 1-14 | INV. G01S17/32 G01S17/36 G01S7/491 |
| Y | US 2015/046111 A1 (CHEN BENYONG [CN] ET AL) 12. Februar 2015 (2015-02-12) * Abbildung 1 * * Absätze [0023] - [0031] * | 1-14 | |
| Y | WO 2009/019468 A1 (QINETIQ LTD [GB]; MCDONALD GREGOR JOHN [GB]; LEWIN ANDREW CHARLES [GB]) 12. Februar 2009 (2009-02-12) * Abbildung 1 * * Seite 5, Zeile 8 - Seite 7, Zeile 22 * | 1-14 | |
| A | DE 37 42 589 A1 (THALES SA [FR]) 26. Februar 2009 (2009-02-26) * Abbildungen 1,2,5 * * Absätze [0016], [0038] - [0048] * | 1-14 | RECHERCHIERTE SACHGEBIETE (IPC) |
| A | DE 39 18 811 A1 (KERNER ANNA [DE]) 28. Dezember 1989 (1989-12-28) * Abbildung 1 * * Spalte 1, Zeile 49 - Spalte 2, Zeile 20 * | 1-14 | G01B G01S |

Der vorliegende Recherchenbericht wurde für alle Patentansprüche erstellt

| Recherchenort | Abschlußdatum der Recherche | Prüfer |
|---|---|---|
| München | 18. Oktober 2017 | Unterberger, Michael |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 16 6662

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2017

| Im Recherchenbericht angeführtes Patentdokument | Datum der Veröffentlichung | Mitglied(er) der Patentfamilie | Datum der Veröffentlichung |
|---|---|---|---|
| EP 2634594 A1 | 04-09-2013 | CN 104160294 A | 19-11-2014 |
| | | EP 2634594 A1 | 04-09-2013 |
| | | EP 2820444 A1 | 07-01-2015 |
| | | JP 5931225 B2 | 08-06-2016 |
| | | JP 2015513086 A | 30-04-2015 |
| | | KR 20140127268 A | 03-11-2014 |
| | | US 2015043007 A1 | 12-02-2015 |
| | | WO 2013127908 A1 | 06-09-2013 |
| US 2015046111 A1 | 12-02-2015 | CN 103075968 A | 01-05-2013 |
| | | US 2015046111 A1 | 12-02-2015 |
| | | WO 2014107924 A1 | 17-07-2014 |
| WO 2009019468 A1 | 12-02-2009 | GB 2464067 A | 07-04-2010 |
| | | US 2010265491 A1 | 21-10-2010 |
| | | WO 2009019468 A1 | 12-02-2009 |
| DE 3742589 A1 | 26-02-2009 | DE 3742589 A1 | 26-02-2009 |
| | | FR 2881842 A1 | 11-08-2006 |
| DE 3918811 A1 | 28-12-1989 | CH 678109 A5 | 31-07-1991 |
| | | DE 3918811 A1 | 28-12-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007079600 A1